# EUROPEAN PATENT APPLICATION

(11) **EP 1 220 457 A2**
(43) Date of publication of application: **03.07.2002**
(21) Application number: 01130507.5
(22) Date of filing: 21.12.2001
(51) Int. Cl.: H04B 1/16, H04M 1/02

(54) **Method and apparatus for controlling electrical power to a display device**

(30) Priority: 27.12.2000 JP 2000399215
(71) Applicant: Kabushiki Kaisha Toshiba, Tokyo 105-8001 (JP)
(72) Inventor: Sawada, Toru, Intellectual Prop. Division, Tokyo 105-8001 (JP)
(74) Representative: HOFFMANN - EITLE

(57) **Abstract**

A purpose of this invention is to decrease power consumption and to prolong the standby time when a user does not need to check the display unit in a radio communication apparatus. A distance sensor (37) in an interface part (3) outputs a signal to a distance detector (21a) in a base band part (2). The signal includes data about a distance between the sensor and an object around the apparatus. The distance detector (21a) outputs a signal for controlling a LCD (34) to a LCD control unit (25). The LCD control unit (25) turns a LCD (34) off or on based on the signal.

## Description

The present invention generally relates to the field of economical use of electrical power and more particularly, is directed to a method and apparatus for controlling electrical power to a display device. The invention will be described with respect to a radio communication apparatus. However, the invention may be used with practically any device which uses an electronic display where efficient use of electrical power is required, such as portable handheld computers, personal digital assistants and the like.

As is currently known in the art, radio communication apparatus usually turn off the display backlight when the apparatus is in an idling state. The backlight is used for lighting a LCD (Liquid Crystal Display) or a key pad unit. As the backlight is turned off for reducing power consumption in the radio communication apparatus while in the idling state, the apparatus still displays data on the display unit.

Sometime a user puts the apparatus in a bag or pocket, or leaves it on a desk when the user does not need to see the display unit. In this condition, data are still displayed on the display unit. Therefore, the apparatus continues to consume power to display data on the display unit. This use of power has a considerable influence upon the radio communication apparatus in the idling state.

As also known in the art, radio communication apparatus are able to reduce power consumption while in an idling state by setting a timer to turn off the display unit when an operation is not performed for a for a fixed period of time. However, a user must perform some form of power restore operation in order to restore power to the display when the user again wishes to view the contents of the display. Doing so is inconvenience for the user.

In the case where the display unit is made of a color LCD, a large screen is usually used in the radio communication apparatus for displaying multimedia data, including moving picture data, text character data. It is a substantial problem to display these data on the display unit in the radio communication apparatus all the time. The problem is that it is expected that the display unit consume a large volume of electric current as compared with a radio communication apparatus equipped with the function to the extent of only speech communication. In idling state, a radio communication apparatus capable of displaying multimedia data consumes a current of 10 mA or above, for example. This current consumption is a great problem in battery consumption because the present radio communication apparatus set forth consumes a current of two to three mA in idling states.

The invention was made in view of the related art as described above. A purpose of the invention is to provide a radio communication apparatus capable of reducing power consumption in case that a user does not need to check a display unit in the apparatus and prolonging a standby time and a talk time in the apparatus.

In order to solve the problem, this invention provides a radio communication apparatus having a display, the radio communication apparatus comprising: a sensor configured to measure data about change in surrounding around the apparatus; a detector configured to detect the measured data; and a controller configured to analyze the detected data and turn the display off based on the detected data.

And this invention also provides a method for controlling a display in a radio communication apparatus comprising: a sensing step of measuring data about change in surroundings around the apparatus; a detecting step of detecting the measured data; and a controlling step of analyzing the measured data and turning the display off based on the detected data.

And this invention also provides a display controller for controlling a display in a radio communication apparatus having a sensor for measuring data about change in surrounding around the apparatus, the display controller comprising: a first control unit configured to detect the measured data; and a second control unit configured to analyze the detected data and turn the display unit off based on the detected data.

Therefore, the display can be turned off automatically in a state in which the radio communication apparatus does not need to check the display unit. The state is, for example, a state in which it is kept in a bag or pocket.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a functional block diagram illustrating a radio communication apparatus in a first embodiment of the invention.
FIG. 2 is a flowchart illustrating an operation for controlling the LCD 34 shown in FIG. 1 in a first embodiment.
FIG. 3 is a flowchart illustrating an operation for controlling the LCD 34 shown in FIG. 1 in a first embodiment.
FIG. 4 is a functional block diagram illustrating a radio communication apparatus in a second embodiment of the invention.
FIG. 5 is a flowchart illustrating an operation for controlling the LCD 34 shown in FIG. 4 in a second embodiment.
FIG. 6 is a flowchart illustrating an operation for controlling the LCD 34 shown in FIG. 4 in a second embodiment.
FIG. 7 is a functional block diagram illustrating a radio communication apparatus in a third embodiment of the invention.

Hereafter, a radio communication apparatus of the invention will be described with reference to the drawings.

The invention takes notice of a point where in many cases; the radio communication apparatus is usually kept in a bag or pocket when it is not used. In case that the radio communication apparatus is in the bag or pocket, a distance between the radio communication apparatus and the object to be measured (an inner wall of the bag or pocket of clothes) comes close to a great extent. This distance is measured and thereby it is determined whether the radio communication apparatus has been in the bag or pocket. In this manner, in case that the radio communication apparatus is in the bag or pocket, the user does not need to check the display and thus the display unit in the apparatus is turned off.

However, it is likely to generate an improper operation, which deviates from the purpose of the invention, such that an object such as a hand might cross before a sensor within a close range even when the apparatus is out of the bag and then the sensor detects that it is a short distance. To omit the improper operation, the apparatus is set to determine that it is a short distance only by the case in which a short distance is detected continuously for a predetermined period or longer. In case that the short distance is determined, it is determined that the radio communication apparatus has been in the bag or pocket and the display part is set to turn off.

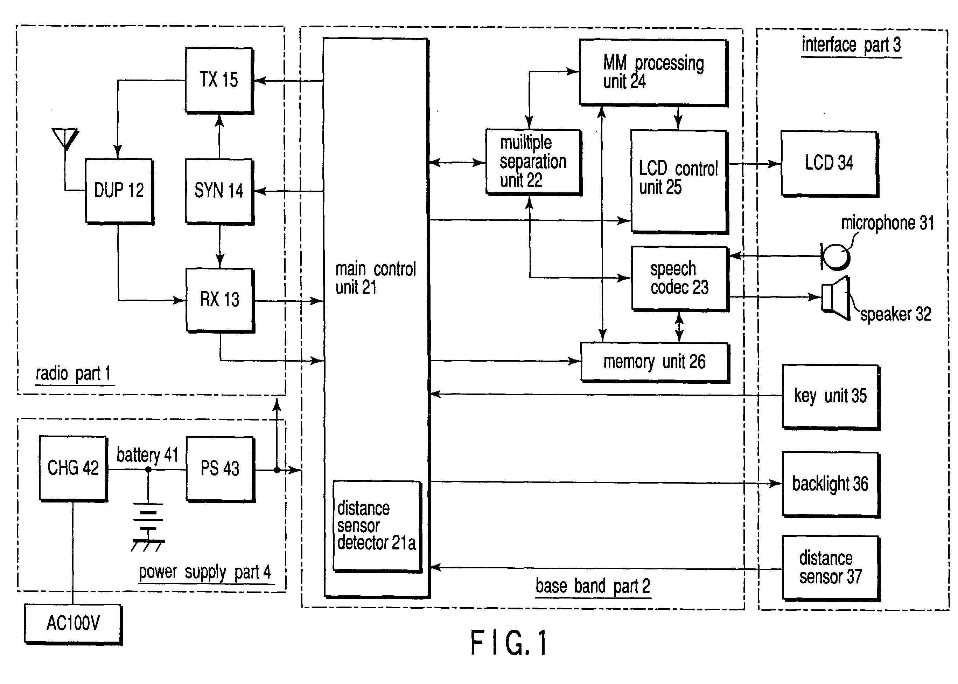

A specific example of a radio communication apparatus in a first embodiment of the invention will be described with reference to FIG. 1 to FIG. 3.

FIG. 1 is a functional block diagram of the radio communication apparatus. A main control unit 21 has a distance detector 21a, and an interface part 3 has a distance sensor 37. In FIG. 1, an antenna 11 in a radio part 1 receives radio frequency signals transmitted from a base station over a radio channel in a mobile radio communication system. The received radio frequency signals are inputted to a receiving circuit (RX) 13 through a duplexer (DUP) 12. The RX 13 has a low noise amplifier, a frequency converter and a demodulator. Then, the radio frequency signals are low-noise-amplified by the low noise amplifier. Subsequently, in the frequency converter, the low-noise-amplified radio frequency signals are mixed with local oscillation signals generated from a frequency synthesizer (SYN) 14 and are frequency-changed to intermediate frequency signals or received base band signals. The demodulator digitally demodulates the mixed signals. A quadrature demodulation mode corresponding to the QPSK (Quadrature Phase Shift Keying) mode is used in the demodulator. In addition, the main control unit 21 in a base band part 2 directs the frequency of the local oscillation signals generated from the SYN 14.

The demodulated signals outputted from the demodulator are inputted to the base band part 2. The base band part 2 has a main control unit 21, a multiplex separation unit 22, a speech coding and decoding unit (hereafter, it is called as the speech codec) 23, a multimedia-processing unit (hereafter, it is called as the MM processing unit) 24, an LCD control unit 25 and a memory unit 26. The main control unit 21 further includes a distance detector 21a.

The demodulated signals are identified in the main control unit 21 whether they are control data or multimedia data. In case that the demodulated signals are multimedia data, they are inputted to the multiplex separation unit 22, are separated into speech data and picture data. The picture data is a compressed picture data such as MPEG-4 picture data. Then, the speech data is inputted to the speech codec 23 and is decoded here. Thereby, the decoded speech signals are outputted from a speaker 32 in a interface part 3.

Meanwhile, the picture data is inputted to the MM processing unit 24. In addition, the MM processing unit 24 decodes the inputted picture data. LCD control unit 25 displays the decoded picture data on the LCD 34. Additionally, the decoded picture data can be stored in the memory unit 26. The main control unit 21 controls the stored picture data.

Furthermore, the speech data decoded in the speech codec 23 can be also stored in the memory unit 26. The main control unit 21 controls the stored speech data. Signals from the distance sensor 37 in the interface part 3 are inputted to the distance detector 21a. On the base of the inputted signals, the distance detector 21a outputs a control signal for controlling the LCD 34 to the LCD control unit 25. In other words, this distance detector 21a turns on or off the display on the LCD 34. The distance sensor 37 is a sensor that detects distances by utilizing infrared rays or ultrasonic waves. This distance sensor 37 is such a sensor that is used for automatic focusing in cameras, a self-cleaning restroom, or an automatic washbasin.

Many types of data indicating the operational states in the apparatus are displayed on LCD 34. The data are such as telephone directory, detected values of received signal strength indicator and a remaining amount of a battery.

Speech signals outputted from a microphone 31 are inputted to the speech codec 23 in the base band part 2. The speech codec codes the inputted speech signals. The coded speech signals are inputted to the multiplex separation unit 22. The multiplex separation unit 22 multiplexes the inputted coded speech data in a predetermined format. The multiplexed speech data is inputted to a transmitting circuit (TX) 15 through the main control unit 21.

The TX 15 has a modulator, a frequency converter and a transmitted power amplifier. The modulator digitally modulates the inputted speech data. The frequency converter mixes the modulated data with local oscillation signals generated by the SYN 14. The mixed speech data is converted to a radio frequency signals. As the modulation mode, the QPSK mode is used. Subsequently, the converted radio frequency signals are amplified to a predetermined transmission level, are inputted to the antenna 11 through the DUP 12 and then are transmitted from the antenna 11 to a base station, not shown.

In addition, a power source part 4 has a battery 41 such as a lithium ion battery; a charging circuit (CHG) 42 for charging this battery 41 and a power supply circuit (PS) 43. The power supply circuit 43 comprises a DC/DC converter, for example, which generates a predetermined power supply voltage Vcc based on the output voltage of the battery 41. Furthermore, the interface part 3 has a backlight 36 for illuminating the LCD 34 and a key unit 35 when operating or communicating.

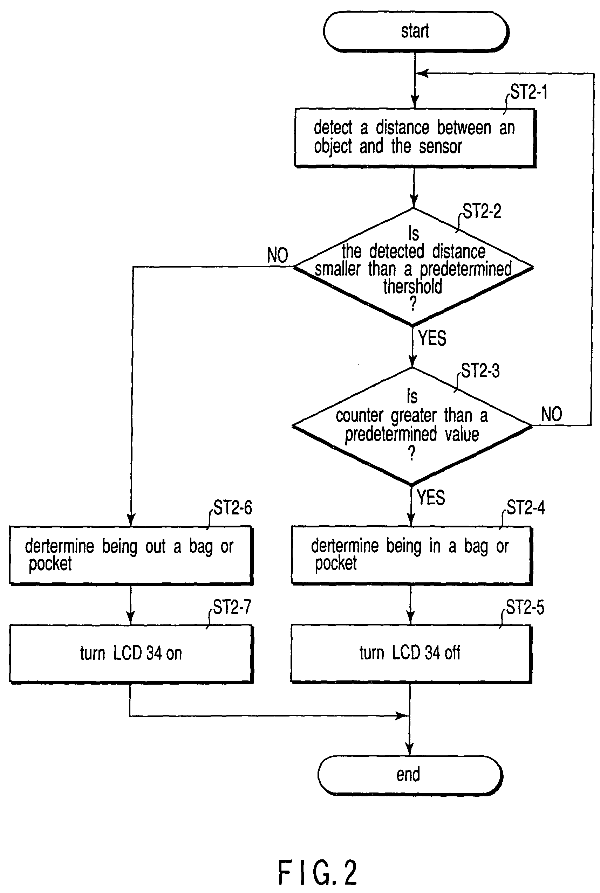

An operation in which the distance sensor 37 is used and the LCD 34 is turned on or off will be described with reference to FIG. 2.

FIG. 2 is a flowchart illustrating the operation, in which the distance sensor 37 in the interface part 3 shown in FIG. 1 is used, it is determined whether the distance to an object that exists around the radio communication apparatus is a short distance and thereby the LCD 34 is turned on or off.

First, at step ST2-1, upon turning on the power of the radio communication apparatus, the distance sensor 37 is activated automatically. In addition, the distance sensor 37 periodically executes the detection of the distance to the object around the radio communication apparatus, based on the period measured by a timer. Synchronizing with operation in which the radio communication apparatus communicates with a base station may activate the distance sensor 37. The distance sensor 37 detects the distance to the object around the radio communication apparatus. A control procedure that the main control unit 21 controls the LCD 36 to turn on or off is performed during idling states.

While the distance sensor 37 always detects a distance, the distance sensor 37 and the distance detector 21a always work. Therefore, in case that the distance sensor 37 always detects the distance, the power consumption during idling states increases and a standby time in the apparatus may become short. As the radio communication apparatus receives radio signals intermittently in a cycle from the base station during idling state, the distance sensor 37 can be set for detecting the distance at the intermittent cycle. This setting reduces the power consumption during idling states and makes the control procedure in the distance sensor 37 simple.

In addition, in case that a cycle of idling state is short, it is possible to set that the distance sensor 37 detects the distance once in several receiving operations. This setting reduces the more power consumption during idling state. In addition, it is possible to set that the intermittent period for detecting the distance is shorter. This setting also reduces the more power consumption during idling state.

At step ST2-2, the main control unit 21 compares the detected distance at step ST2-1 with a predetermined threshold and determines that whether the detected distance is smaller than the predetermined threshold or not. A user can set the threshold by using the key unit 35. This threshold may be set with assumption that the radio communication apparatus is in a bag or pocket. In case that the radio communication apparatus is in a bag or pocket, the detected distance is usually within a few centimeters. Therefore, the predetermined threshold may be generally set as a few centimeters.

In addition, the distance detector 21a detects some distances in a predetermined period. The detected distances are stored in memory unit 26. The main control unit 21 compares each of the stored distances with the predetermined threshold. The predetermined period and the predetermined threshold can be set flexibly.

At this step ST2-2, in case that the detected distance is smaller than the threshold, proceed to step ST2-3, in case that the detected distance is equal to or greater than the threshold, proceed to step ST2-6.

At step ST2-3, the main control unit 21 determines whether a detection that each of the detected distances is smaller than the predetermined threshold is continuous until a predetermined value or not and stores the number of the continuous detection in the memory unit 26. A counter in the main control unit 21 counts the determined continuous number. The main control unit 21 stores the counted number in the memory unit 26. The user can set the predetermined value by the key input unit 35.

In case that the counted number is greater than the predetermined value, proceed to step ST2-4, whereas in case that the counted number is equal to the predetermined value or smaller than the predetermined value, the counter is reset and return to step ST2-1. After returning to step ST2-1, the distance detection by the distance sensor 37 is again executed.

At step ST2-4, the main control unit 21 determines that an object exists around the radio communication apparatus, in other words, the radio communication apparatus is in a bag or pocket, and proceed to step ST2-5. At step ST2-5, the main control unit 21 indicates to the LCD control unit 25. The indicated LCD control unit 25 turns the LCD 34 off.

On the other hand, at step ST2-6, the main control unit 21 determines that an object does not exist around the radio communication apparatus; for example, the radio communication apparatus is out of a bag or pocket, move to step ST2-7. At step ST2-7, the main control unit 21 indicates to the LCD control unit 25. The indicated LCD control unit 25 turns the LCD 34 on.

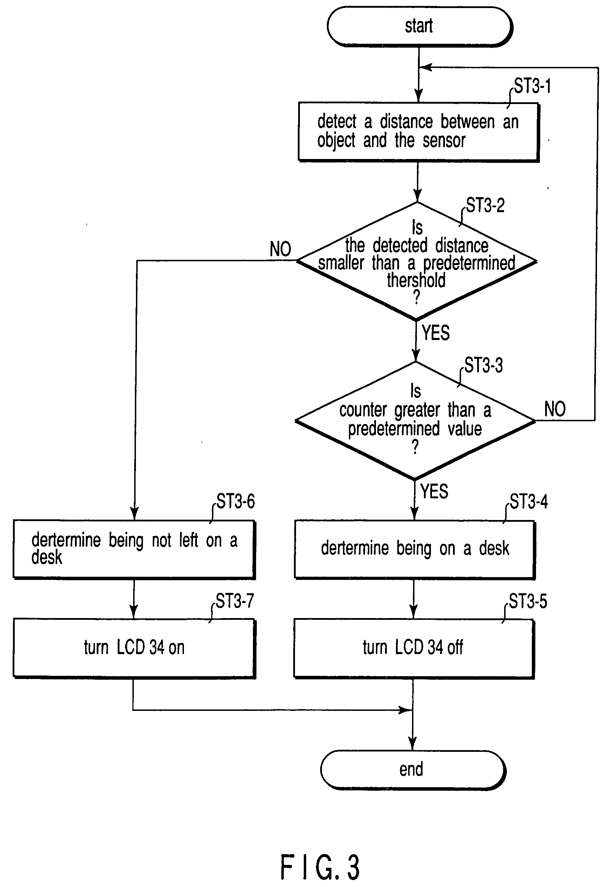

Next, another example will be described with reference to FIG. 3, in which the distance sensor 37 is used as same as the above embodiment. In this example, the distance detector 21a determines whether the distance between the radio communication apparatus and the object around the apparatus is still constant or not. On base of the determined result, the main control unit 21 indicates to the LCD control unit 25 for controlling the LCD 34.

In this example, it is assumed that a radio communication apparatus is left on the desk for a long time. In this case, in the above-described example, the LCD 34 might not be turned off because a distance apart from the apparatus to some extent is often detected continuously. In this example, the LCD 34 is controlled to turn off in case that the radio communication apparatus is left on the desk for a long time.

However, in case that the radio communication apparatus is set to turn off the LCD 34 automatically, it is likely that a user might think that the radio communication apparatus does not work. Therefore, in case that the apparatus is left on the desk and the detected distance is still constant, it is preferable that the user can set the LCD 34 to be turned off at his/her disposal. In case that a user wants the LCD 34 in a turned-off state to be turned on, it is essential only that a slight change is added to the distance detection such that the user moves the apparatus a little or lays a hand in front of the distance sensor 37. This is a convenient function because it is easy for the user.

Step ST3-1 is same step ST2-1 shown in FIG. 2. That is, upon turning on the power of the radio communication apparatus, the distance sensor 37 is activated automatically. In addition, the distance sensor 37 periodically detects a distance to the object around the radio communication apparatus, based on the period measured by a timer. Synchronizing with operation in which the radio communication apparatus communicates with a base station may activate the distance sensor 37. The distance sensor 37 detects a distance to the object around the radio communication apparatus. The distance sensor 37 detects a plurality of the distances in a period.

At step ST3-2, the main control unit 21 stores the detected distances in the memory unit 26. The distance sensor 37 determines whether each of the stored distance is greater than a predetermined threshold or not.

A user can set the threshold by using the key unit 35. This predetermined threshold depends on the performance in the distance sensor 37 and thus the adjustment is needed according to the distance sensor 37.

At this step ST 3-2, in case that each of the detected distances is smaller than the threshold, proceed to step ST3-3, in case that the detected distances in the period is equal to or greater than the threshold, proceed to step ST3-6.

At step ST3-3, the main control unit 21 determines whether a count of the continuous detection that the detected distance is constant is greater than a predetermined value or not. In addition, the main control unit 21 stores the count in the memory unit 26. A counter in the main control unit 21 counts the continuous detection. The user can set the predetermined value by the key input unit 35.

In case that the stored count is greater than the predetermined value, proceed to step ST3-4. In case that the stored count is equal to the predetermined value or smaller than the predetermined value, the counter is reset and return to step ST3-1. After returning to step ST3-1, the distance detection by the distance sensor 37 is again executed.

At step ST3-4, for example, the main control unit 21 determines that the radio communication apparatus is left on the desk, and proceed to step ST3-5. At step ST3-5, the main control unit 21 indicates to the LCD control unit 25. The indicated LCD control unit 25 turns the LCD 34 off.

On the other hand, at step ST3-6, the main control unit 21 determines that the radio communication apparatus is not left on the desk, and proceed to step ST3-7. At step ST3-7, the main control unit 21 indicates to the LCD control unit 25. The indicated LCD control unit 25 turns the LCD 34 on.

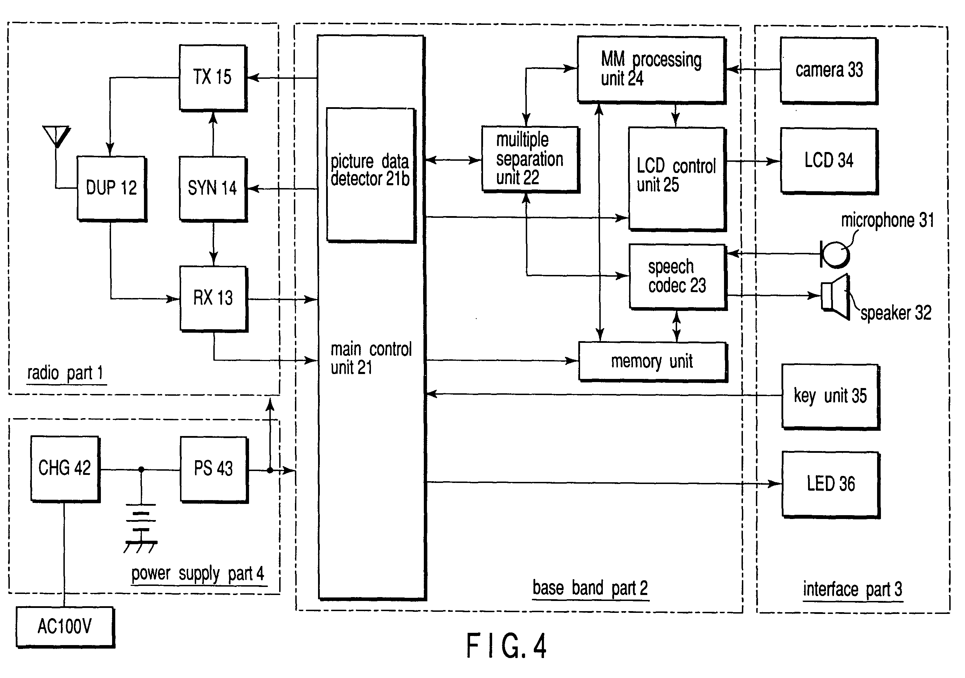

A specific example of a radio communication apparatus in a second embodiment of the invention will be described with reference to FIG. 4 to FIG. 6. FIG. 4 is a functional block diagram illustrating the radio communication apparatus in the second embodiment of the invention. The main control unit 21 has a picture data detector 21b. The interface part 3 has a camera 33.

The radio communication apparatus in this embodiment is same as the radio communication apparatus in the first embodiment, except having the camera 33 and the picture data detector 21b.

The picture data signals outputted from the camera 33 are inputted to the MM processing unit 24 in the base band part 2, are processed for picture coding and then are inputted to the multiplex separation unit 22. Alternatively, this camera 33 may be a product similar to the camera that is used in a visual telephone.

Moreover, as similar to the case in which the distance sensor 37 is used which has been described in the first embodiment, the camera 33 automatically takes picture data at the timing that is synchronized with the intermittent receiving operations during idling state.

The picture data detector 21b detects a chromaticity data, luminance data and object data in the picture data. In addition, the main control unit 21 analyzes the picture data. On this analysis, the main control unit 21 determines a circumstance around the radio communication apparatus.

Besides, the picture data taken by the camera 33 are not displayed on the LCD 34, used only for processing the picture data in the apparatus.

In addition, the other detailed signal operations are the same as the first embodiment.

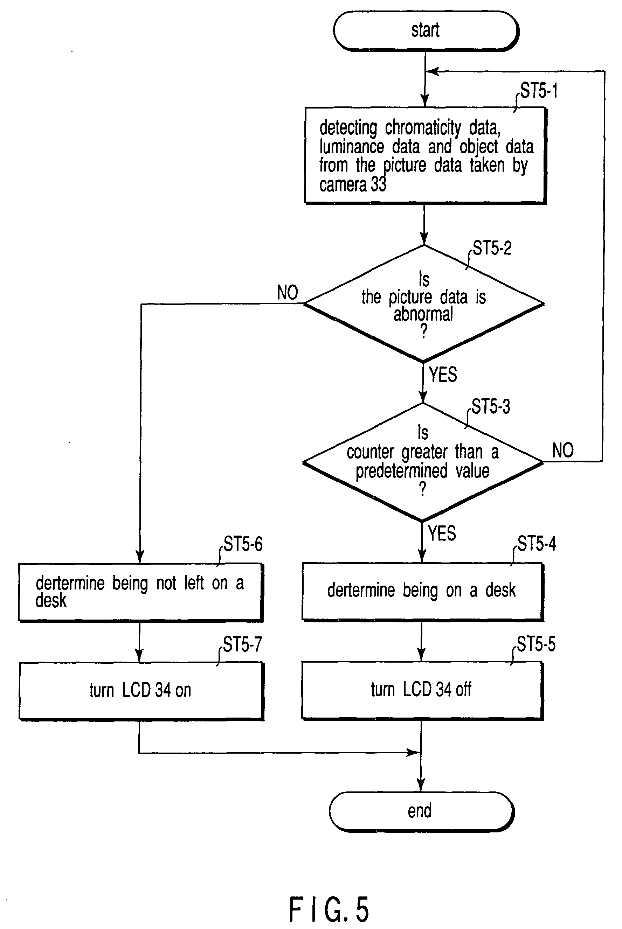

An operation in this embodiment will be described with reference to FIG. 5. FIG. 5 is a flowchart illustrating the operation that main control unit 21 analyses the picture data taken by the camera 33 and indicate the LCD control unit 25 to control the LCD 34 to turn on or turn off.

First, at step ST5-1, upon turning on the power of the radio communication apparatus, the camera 33 is activated automatically. In addition, the camera 33 periodically inputs the picture data around the apparatus to the multimedia processor 24, based on the period measured by a timer. The camera 33 inputs the picture data to the multimedia processor 24 in a period. Synchronizing with operation in which the radio communication apparatus communicates with a base station may activate the camera 33.

At step ST5-1, the main control unit 21 stores the inputted picture data in the memory unit 26. The picture data detector 21b detects chromaticity data, luminance data and object data from the stored picture data and determines whether the stored picture data is an abnormal picture data or not.

For example, in case that the detected chromaticity data contains only black color, the radio communication apparatus is considered to be in a bag and the main control unit 21 determines that the stored picture data is an abnormal picture data. As another example, in case that the luminance data shows that the luminance around the radio communication apparatus is almost zero, the radio communication apparatus is considered to be at a dark place and the main control unit 21 determines that the stored picture data is an abnormal picture data.

Specifically, each of the detected data is referred in this manner and then the main control unit 21 determines whether each of the stored picture data is abnormal or not. Consequently, in case that all of each detected data finally shows abnormality, the main control unit 21 determines that the stored picture data is abnormal.

It is assumed that the criteria for the determination that the main control unit 21 determines the stored picture data is abnormal may be modified variously. For example, it is possible that the main control unit 21 determines that the stored picture data is abnormal in case that the detected luminance data in the stored picture data is abnormal.

The criteria for the determination may be changed depending on the environment where the user generally uses the radio communication apparatus. For example, in case that the radio communication apparatus is almost always at a bright place, the luminance data is preferably set not to be referred for the determination.

At step STS-2, in case that the main control unit 21 determines that the stored picture data is abnormal, proceed to step ST5-3. In case that the main control unit 21 determines that the stored picture data are not abnormal, proceed to step ST5-6.

At step ST5-3, the main control unit 21 determines whether a count of the continuous detection that the stored picture data is determined as being abnormal greater than a predetermined value or not. In addition, the main control unit 21 stores the count in the memory unit 26. A counter in the main control unit 21 counts the continuous detection. The user can set the predetermined value by the key input unit 35.

Alternatively, the main control unit 21 may determine whether a count of the continuous detection that the stored picture data is determined as being abnormal greater than a predetermined value or not in a period. The reason why the continuous detection is referred is for omitting the case of determining picture data as being abnormal in case that an object such as a hand crosses before the camera even when the radio communication apparatus is out of a bag.

In case that the stored count is greater than the predetermined value, proceed to step ST5-4. In case that the stored count is equal to the predetermined value or smaller than the predetermined value, the counter is reset and return to step ST5-1. After returning to step ST5-1, the camera 33 again inputs the picture data to the multimedia processor 24 in a period.

At step ST5-4, for example, the main control unit 21 determines that the radio communication apparatus is in a bang or pocket, and proceed to step ST3-5. At step ST3-5, the main control unit 21 indicates to the LCD control unit 25. The indicated LCD control unit 25 turns the LCD 34 off.

On the other hand, at step ST3-6, the main control unit 21 determines that the radio communication apparatus is not in a bang or pocket, and proceed to step ST3-7. At step ST3-7, the main control unit 21 indicates to the LCD control unit 25. The indicated LCD control unit 25 turns the LCD 34 on.

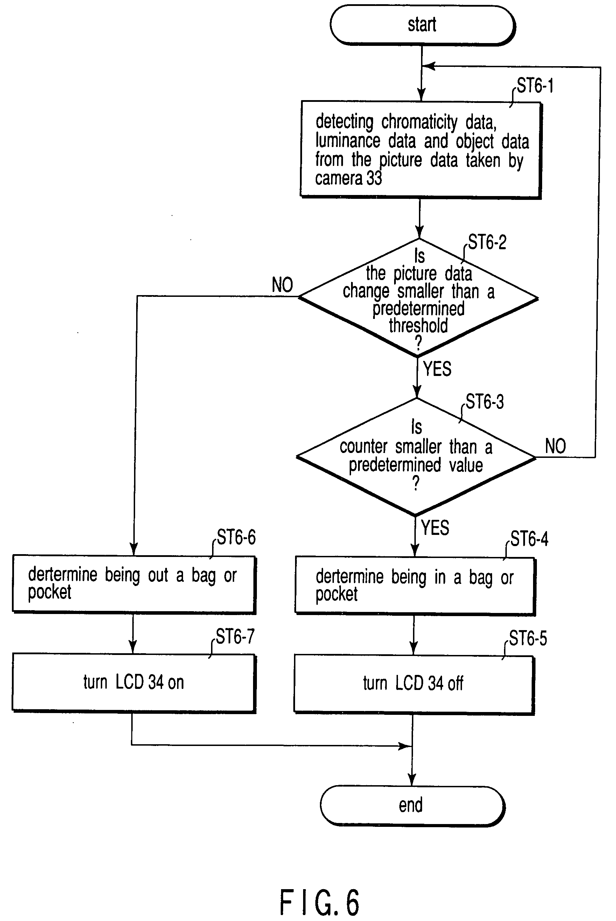

Next, another example will be described with reference to FIG. 6, in which the camera 33 is used as same as the above embodiment. In this example, the main control unit 21 determines whether the picture data inputted from the camera 33 is still constant or not. On base of the determined result, the main control unit 21 indicates to the LCD control unit 25 for controlling the LCD 34.

At step ST6-1, That is, upon turning on the power of the radio communication apparatus, the camera 33 is activated automatically. In addition, the camera periodically inputs a picture data to the MM processor 24, based on the period measured by a timer. Synchronizing with operation in which the radio communication apparatus communicates with a base station may activate the camera 33. The camera 33 inputs a plurality of the picture data in a period.

At step ST6-2, the main control unit 21 stores the inputted picture data in the memory unit 26. The main control unit 21 determines whether the stored picture data change is smaller than a predetermined threshold or not. The picture data detector 21b detects chromaticity data, luminance data and object data from the stored picture data. In addition, the main control unit 21 determines whether the stored picture data change is smaller than the predetermined threshold or not.

In case that the main control unit 21 determines that the stored picture change is smaller than the predetermined threshold, for example, the main control unit 21 determines that the radio communication apparatus is still left on the desk. And in case that the main control unit 21 determines that the stored picture change is equal to or greater than the predetermined threshold, for example, the main control unit 21 determines that the radio communication apparatus is not still left on the desk.

The picture data change is calculated base on the detected chromaticity data, luminance data and object data. In additionally, and the picture data change may be calculated base on at least one of the detected chromaticity data, luminance data and object data. It is preferable to determine the data to be selected for calculating, depending on an environment where the user's radio communication apparatus is used. In additionally, a user can set the predetermined threshold by using the key unit 35. This predetermined threshold depends on the performance in the camera 33 and thus the adjustment is needed according to the camera 33.

At step ST6-2, in case that the main control unit 21 determines that the pictured data change is smaller than the predetermined threshold, proceed to step ST6-3. In case that the main control unit 21 determines that the pictured data change is equal to the predetermined threshold or greater than the predetermined threshold, proceed to step ST6-6.

At step ST6-3, the main control unit 21 determines whether a count of the continuous detection that the calculated picture data change is smaller than the predetermined threshold is greater than a predetermined value or not. In addition, the main control unit 21 stores the count in the memory unit 26. A counter in the main control unit 21 counts the continuous detection. The user can set the predetermined value by the key input unit 35.

In case that the stored count is greater than the predetermined value, proceed to step ST6-4. In case that the stored count is equal to the predetermined value or smaller than the predetermined value, the counter is reset and return to step ST6-1. After returning to step ST3-1, the camera 33 again inputs the picture data to the multimedia processor 24 in a period.

At step ST6-4, for example, the main control unit 21 determines that the radio communication apparatus is left on the desk, and proceed to step ST6-5. At step ST6-5, the main control unit 21 indicates to the LCD control unit 25. The indicated LCD control unit 25 turns the LCD 34 off.

On the other hand, at step ST6-6, the main control unit 21 determines that the radio communication apparatus is not left on the desk, and proceed to step ST6-7. At step ST6-7, the main control unit 21 indicates to the LCD control unit 25. The indicated LCD control unit 25 turns the LCD 34 on.

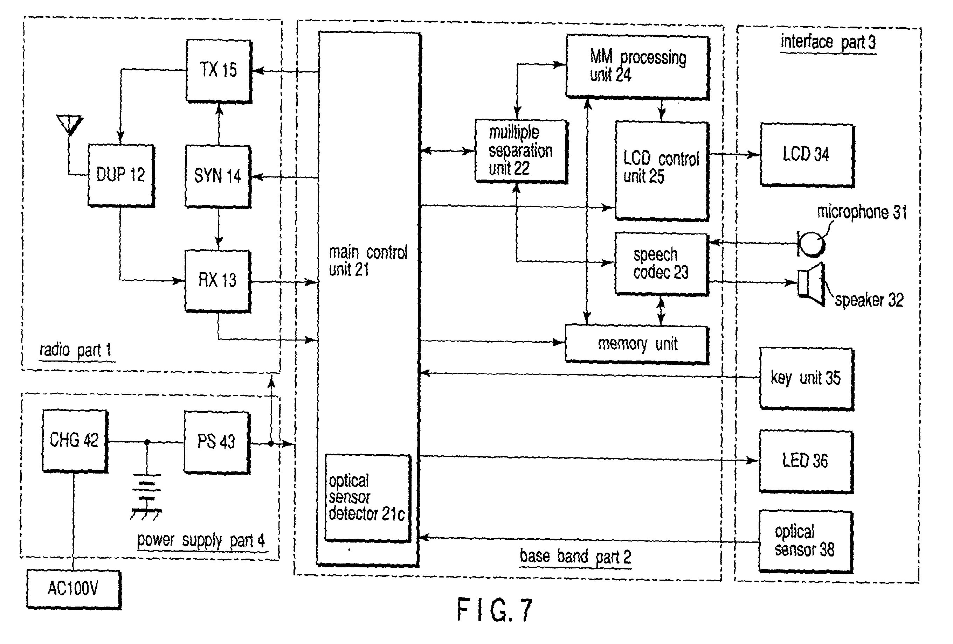

Additionally, as a modified example of this embodiment, a radio communication apparatus will be described with reference to FIG. 7.

The radio communication apparatus in FIG. 7 has an optical sensor 38 in the interface part 3 instead of the camera 33. The radio communication apparatus also has an optical sensor detector 21c in the main control unit 21 instead of the picture data detector 21b.

The optical sensor 38 is for detecting light. The optical sensor may be a photoconductive cell, a photodiode, a photo resistor, a photoelectric discharge tube, a phototransistor or a photocell.

In case that the optical sensor 38 detects light, a signal indicating the detection is inputted to the optical sensor detector 21c in the main control unit 21. On base of the inputted signal, the optical sensor detector 21c measures the power of light and the main control unit 21 indicates the LCD control unit 25 to control the LCD 34 to turn on or turn off.

An operation with using the optical sensor 38 and the optical sensor detector 21c for controlling the LCD 34 to turn on or off is the same as the operation shown in FIG. 5. That is, the case where the optical sensor 38 does not detect light corresponds to the case where the stored picture data is abnormal in the second embodiment. In addition, the optical sensor 38 corresponds to the camera in the second embodiment. The other operations are the same as those shown in FIG. 5.

The radio communication apparatus in this invention may have the distance sensor 37 and the distance detector 21a in FIG. 1, camera 33 and the picture data detector 21b in FIG. 4, optical sensor 38 and optical sensor detector 21c in FIG. 7.

According to the radio communication apparatus of this invention, the display is turned on or off in response to a change in surroundings. Thus, when the user wants to see the screen, the display turns on with no manipulation by the user and the user can confirm the display.

Additionally, unnecessary power consumption can be reduced and thus the standby time and talk time can be further prolonged.

Furthermore, for the LCD used as the display, it has long lifetime and can suppress deterioration in performance, as compared with the case where the LCD is operated all the time.

It should be obvious from the above-discussed apparatus embodiment that numerous other variations and modifications of the apparatus of this invention are possible, and such will readily occur to those skilled in the art. Accordingly, the scope of this invention is not to be limited to the embodiment disclosed, but is to include any such embodiments as may be encompassed within the scope of the claims appended hereto.

## Claims

1. An electrically powered apparatus having an electronic display for displaying data to a user of said apparatus, said apparatus comprising:
a sensor (37, 33, 38) configured to measure data about change in surrounding around the apparatus;
a detector (21a, 21b, 21c) configured to detect the measured data; and
a controller (21) configured to analyze the detected data and turn the display (34) off based on the detected data.

2. The apparatus according to claim 1, **characterized in that** the sensor (37) measures a distance between the apparatus and an object in the surrounding area.

3. The apparatus according to claim 2, **characterized in that** the controller (21) turns the display (34) off in case of determining that the measured distance is lower than a value.

4. The apparatus according to claim 3, **characterized in that** the controller (21) turns the display (34) off in case of detecting a continuous number of counting that the measured distance is lower than a value.

5. The apparatus according to claim 1, the sensor (37, 33, 38) includes an image taking unit configured to take an image data, **characterized in that** the controller (21) turns the display (34) off based on the taken image data.

6. The apparatus according to claim 5, **characterized in that** the controller (21) turns the display (34) off in case of detecting that a chromaticity data in the taken image data is black.

7. The apparatus according to claim 5, **characterized in that** the controller (21) turns the display (34) off in case of detecting that luminance in the taken data image data does not exist.

8. The apparatus according to claim 1, **characterized in that** the sensor (38) measures power of light.

9. The apparatus according to claim 1, **characterized in that** the detector (21a, 21b, 21c) detects the data at intermittently cycle being synchronized with a receiving operation in the apparatus.

10. The apparatus according to claim 1, **characterized in that** the detected data is a quantity level that displayed data on the display unit (34) does not need to be confirmed.

11. A method for controlling a display in an electrically powered apparatus, said method comprising the step of:
a sensing step (37, 33, 38) of measuring data about change in surroundings around the apparatus;
a detecting step (ST2-1, ST3-1, ST5-1, ST6-1) of detecting the measured data; and
a controlling step (ST2-2 to ST2-5, ST3-2 to ST3-5, ST5-2 to ST5-5, ST6-2 to ST6-5) of analyzing the measured data and turning the display off based on the detected data.

12. The method according to claim 11, **characterized in that** a distance between the apparatus and an object in surrounding is measured at the sensing step (37).

13. The method according to claim 12, **characterized in that** the display (34) is turned off in case of determining that the measured distance is lower than a value at the controlling step (ST2-2 to ST2-5, ST3-2 to ST3-5).

14. The method apparatus according to claim 13, **characterized in that** the display (34) is turned off in case of detecting a continuous number of counting that the measured distance is lower than a value at the controlling step (ST2-2, ST3-2).

15. The method according to claim 11, the sensing step (33, 38) includes an image taking step for taking an image data, **characterized in that** the display (34) is turned off based on the taken image data at the controlling step (ST5-2 to ST5-5, ST6-2 to ST6-5).

16. The method apparatus according to claim 15, **characterized in that** the display (34) is turned off in case of detecting that chromaticity data in the taken image data is expressing black at the controlling step (ST5-2 to ST5-3, ST6-2 to ST6-3).

17. The method according to claim 15, **characterized in that** the display is turned off in case of detecting that luminance in the taken image data does not exist at the controlling step (ST5-2 to ST5-3, ST6-2 to ST6-3).

18. The method according to claim 11, **characterized in that** power of light is measured at the sensing step (38).

19. The method according to claim 11, **characterized in that** the measured data at intermittently cycle being synchronized with a receiving operation in the apparatus is detected at the detecting step (ST2-1, ST3-1, ST5-1, ST6-1).

20. The method according to claim 11, **characterized in that** the detected data is a quantity level that displayed data on the display unit (34) does not need to be confirmed at the detecting step (ST2-1, ST3-1, ST5-1, ST6-1).

21. A display controller for controlling a display in an electrically powered apparatus having a sensor for measuring data about a change in surrounding around the apparatus, the display controller **characterized by** comprising:
a first control unit (21a, 21b, 21c) configured to detect the measured data; and
a second control unit (21) configured to analyze the detected data and turn the display unit off based on the detected data.

22. The display controller according to claim 21, **characterized in that** the sensor (37) detects a distance between the apparatus and an object in surrounding.

23. The display controller according to claim 22, **characterized in that** the second control unit (21) turns the display unit (34) off in case of determining at the detected distance is lower than a value.

24. The display controller according to claim 23, **characterized in that** the second control unit (21) turns the display unit (34) off in case of detecting a continuous number of counting that the detected distance is lower than a value.

25. The display controller according to claim 21, the sensor (33, 38) includes an image taking unit configured to take an image data, **characterized in that** the second control unit (21) analyzes the taken image data and turns the display unit (34) off based on the taken image data.

26. The display controller according to claim 25, **characterized in that** the second control unit (21) turns the display unit (34) off in case of detecting that a chromaticity data in the taken image data is black.

27. The display controller according to claim 25, **characterized in that** the second control unit (21) turns the display unit (34) off in case of detecting that luminance in the taken data image data does not exist.

28. The display controller according to claim 21, **characterized in that** the sensor (38) measures data about power of light.

29. The display controller according to claim 21, **characterized in that** the first control unit (21a, 21b, 21c) detects change at intermittently cycle being synchronized with a receiving operation in the radio communication apparatus.

30. The display controller according to claim 21, **characterized in that** the detected data is quantity level that displayed data on the display unit (34) does not need to be confirmed.

31. The apparatus according to claim 1, **characterized in that** said apparatus is a personal digital assistance.

32. The apparatus according to claim 1, **characterized in that** said apparatus is a handheld computer.

33. The apparatus according to claim 1, **characterized in that** said apparatus is a laptop computer.

34. The apparatus according to claim 1, **characterized in that** said apparatus operates from a battery supply.
